Europäisches Patentamt

European Patent Office

Office européen des brevets

(19)

(11) Numéro de publication : **0 053 376**
**B1**

(12) # FASCICULE DE BREVET EUROPÉEN

(45) Date de publication du fascicule du brevet :
**19.12.84**

(21) Numéro de dépôt : **81109968.8**

(22) Date de dépôt : **27.11.81**

(51) Int. Cl.³ : **F 02 B 37/12**

(54) Dispositif de suralimentation de moteur à combustion interne par turbocompresseur.

(30) Priorité : **02.12.80 FR 8025577**
**20.01.81 FR 8101004**
**05.05.81 FR 8108929**

(43) Date de publication de la demande :
**09.06.82 Bulletin 82/23**

(45) Mention de la délivrance du brevet :
**19.12.84 Bulletin 84/51**

(84) Etats contractants désignés :
**BE DE GB IT NL SE**

(56) Documents cités :
**DE-A- 2 823 255**
**FR-A- 2 369 423**
**FR-A- 2 392 230**
**FR-A- 2 446 923**
**GB-A- 2 039 610**
**US-A- 3 233 403**
**US-A- 4 203 296**
**AUTOMOTIVE ENGINEERING, vol. 88, no. 6, juin 1980, pages 70-73 New York, U.S.A. "Turbo boost controlled by knock detection"**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Chafflotte, Pierre**
**2, Parc de Béarn**
**F-92210 Saint-Cloud (FR)**

(74) Mandataire : **Casalonga, Axel et al**
**BUREAU D.A. CASALONGA OFFICE JOSSE & PETIT**
**Baaderstrasse 12-14**
**D-8000 München 5 (DE)**

Jouve, 18, rue St-Denis, 75001 Paris, France

**Description**

L'invention se rapporte à un dispositif de suralimentation de moteur à combustion interne par turbocompresseur entraîné par les gaz d'échappement.

On sait que l'utilisation d'un turbocompresseur crée une contre-pression à l'échappement du moteur. La conséquence de cette contre-pression non négligeable est une augmentation de consommation de carburant. Aussi, en supprimant ou en diminuant cette contre-pression, on peut obtenir un gain de consommation, gain qui peut atteindre 10 % dans certains cas. On sait que l'utilisation actuelle d'un clapet de dérivation des gaz d'échappement, dit « waste-gate » en terminologie anglaise, soumis à une valve de commande sensible à la pression de sortie du compresseur, a pour but de limiter la pression de suralimentation d'admission à un certain seuil, c'est-à-dire de protéger le moteur.

On connaît, notamment d'après le brevet US-A-4 203 296, l'intérêt de commander l'ouverture et la fermeture du clapet de dérivation des gaz d'échappement selon la puissance demandée au moteur. En effet, aux bas régimes à charge partielle du moteur, on a besoin de peu de suralimentation et le clapet de dérivation peut donc être ouvert afin de réduire la contre-pression à l'échappement, ce qui correspond à un gain de consommation. Aux régimes plus élevés, ledit clapet de dérivation peut alors être progressivement fermé selon la puissance demandée. Dans ce fonctionnement, la contre-pression à l'échappement est plus faible que dans l'utilisation classique du clapet qui ne s'ouvre que pour un seuil de protection du moteur, et l'on trouvera encore un gain de consommation.

La présente invention a pour objet un dispositif relativement simple et peu onéreux permettant de satisfaire avantageusement ces conditions. Essentiellement, à cet effet, le dispositif de suralimentation selon l'invention de moteur à combustion interne par turbocompresseur, comprenant une turbine entraînée par les gaz d'échappement, un compresseur d'air entraîné par la turbine et raccordé à la tubulure d'admission du moteur, et un clapet de dérivation des gaz d'échappement soumis à une valve de commande sensible à une pression dérivée du compresseur, ladite valve de commande étant d'autre part placée sous la dépendance d'une valve de pilotage sensible à la dépression à l'admission du moteur, qui, gouverne la valve de commande à l'ouverture du clapet de dérivation aux bas régimes à charge partielle du moteur et à la fermeture aux régimes plus élevés du moteur, caractérisé par le fait que la valve de commande est sensible à la pression de sortie du compresseur et que la partie de la valve de commande sensible à la pression de sortie du compresseur est reliée à un organe de mise à l'atmosphère actionné progressivement à partir d'une position de plein actionnement du papillon d'admission du moteur atteinte en cours de course de commande de puissance maximale, de sorte que dans la partie de cette course faisant suite à la pleine ouverture du papillon d'admission, la puissance délivrée est fonction du pilotage, à la fermeture du clapet de dérivation dépendant du degré d'actionnement dudit organe de mise à l'atmosphère.

Ces dispositions n'empêchent pas d'obtenir en cas d'appui à fond sur la pédale d'accélération du véhicule (kick-down), la fermeture rapide du clapet de dérivation afin d'obtenir la puissance maximale disponible du moteur. Elles permettent de réduire la phase de laminage de l'admission par le papillon qui se trouve ouvert totalement dans une fraction seulement de la course de commande de puissance prévue par action sur la pédale d'accélérateur usuelle, ce qui est favorable à un accroissement relatif de suralimentation et à une réduction relative de contre-pression favorables à la consommation du moteur par rapport à une commande d'accélérateur dont toute la course est utilisée comme c'est l'usage à provoquer l'ouverture totale du papillon d'admission. En outre, le dispositif de suralimentation selon l'invention, est en outre caractérisé en ce qu'il est interposé dans la liaison entre la partie de la valve de commande sensible à la pression de sortie du compresseur et ledit organe de mise à l'atmosphère, une valve de fermeture de cette liaison répondant à une pression de sortie maximale prédéterminée du compresseur, afin que ladite valve de commande réponde à cette fermeture par l'ouverture du clapet de dérivation, destinée à limiter la pression de suralimentation à une valeur de sécurité prédéterminée.

On verra en outre qu'avec la conduite relativement économique permise par le dispositif selon l'invention, intervenant surtout aux vitesses d'utilisation routières du véhicule, on peut introduire aisément et à volonté une suralimentation plus élevée à consommation plus élevée procurant des performances plus élevées lorsque désiré. On verra notamment qu'un dispositif selon l'invention se prête aussi à prévoir la fermeture du clapet de dérivation même aux faibles charges afin d'obtenir une suralimentation plus importante lorsque le conducteur désire adopter une conduite dite sportive du véhicule, sans souci de consommation réduite.

On verra aussi qu'un dispositif selon l'invention se prête à éviter de manière simple tout fonctionnement anormal détectable auquel un moteur à combustion interne suralimenté peut notamment être sujet aux régimes élevés et à éviter ainsi toute détérioration conséquente.

Plusieurs formes de réalisation d'un dispositif de suralimentation selon l'invention sont d'ailleurs ci-après décrites, à titre d'exemple et en référence au dessin annexé, dans lequel :

la figure 1 est une vue schématique d'ensemble d'un tel dispositif ;

la figure 2 est une vue analogue d'un tel dispositif équipé d'un système de contrôle de fonctionnement anormal du moteur ;

la figure 3 est une vue schématique des principaux organes d'une première variante du dispositif de suralimentation de la figure 1 ;

la figure 4 est une vue analogue d'une autre variante ; et

la figure 5 illustre une position commandée d'obtention d'une suralimentation plus élevée par la valve supplémentaire de la variante de la figure 4.

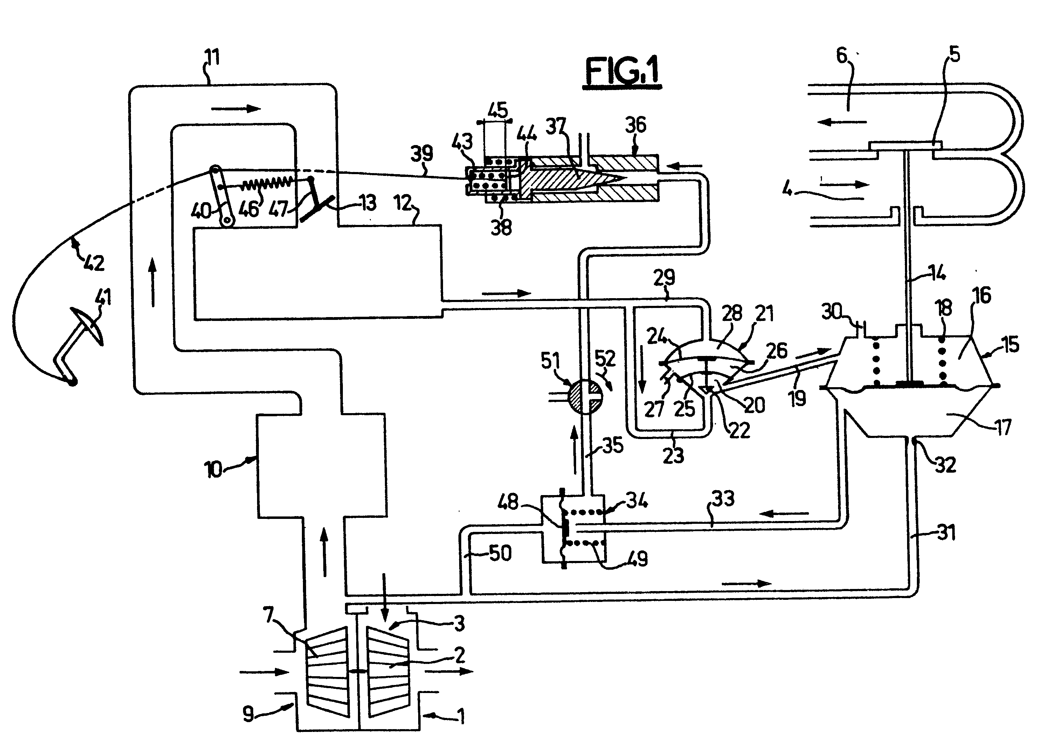

Le dispositif de suralimentation de moteur représenté à la figure 1 comprend un turbocompresseur, désigné par 1 dans son ensemble, ayant une turbine 2 entraînée par les gaz d'échappement lui parvenant suivant la flèche 3 d'un conduit de sortie 4 du collecteur d'échappement partiellement représenté, sur lequel est monté un clapet 5 de dérivation contrôlée des gaz d'échappement à l'atmosphère, s'ouvrant sur un conduit de dérivation 6 également partiellement représenté.

Le turbocompresseur comprend aussi une turbine 7 solidaire en rotation de la turbine à gaz 2 et constituant l'élément actif d'un compresseur d'air 9, qui est raccordé à un échangeur air 10 de refroidissement de l'air destiné à alimenter par un conduit 11 le collecteur d'admission 12 du moteur.

Cette alimentation est ici représentée avec interposition d'une tubulure à papillon de réglage de puissance 13, qui peut être notamment un papillon de réglage d'admission d'air dans le cas d'un moteur à injection ou un papillon de réglage de mélange air-essence lorsqu'un carburateur est interposé entre le conduit 11 et le collecteur 12.

Le clapet de dérivation 5 est relié par une tige 14 à la membrane d'une valve de commande 15 formant deux chambres 16 et 17 de part et d'autre de la membrane.

La chambre 16 contient un ressort de compression 18 sollicitant le clapet 5 en position de fermeture. Elle est reliée, par l'intermédiaire d'un conduit 19, à l'une des chambres 20 d'une valve de pilotage 21, comprenant un clapet 22 destiné à mettre ou non en communication le conduit 19 avec un conduit 23 relié au collecteur d'admission.

Cette valve de pilotage 21 comprend deux membranes 24, 25 solidaires du clapet 22 et formant entre elles une chambre 26 à évent 27 ouvert à l'atmosphère. La membrane 24, de plus grande section que l'autre, délimite dans le corps de la valve 21 une chambre 28 qui est reliée par un conduit 29 au conduit 23 de liaison avec le collecteur d'admission.

Cette valve de pilotage est donc à fonctionnement différentiel selon la valeur de la pression dans le collecteur d'admission 12 comparée à la pression atmosphérique, c'est-à-dire d'un état de dépression dans le collecteur entraîne l'ouverture du clapet 22 de la valve tandis qu'une valeur de pression dans le collecteur supérieure à la pression atmosphérique provoque au contraire la fermeture du clapet 22 de la valve 21.

La chambre 16 est en outre mise en permanence en liaison avec l'atmosphère par un évent 30. L'autre chambre 17 de la valve de commande 15 est reliée à la sortie du compresseur 9 par un conduit 31 pourvu d'un étrangleur calibré 32 à l'entrée de la chambre. Elle est également reliée par l'intermédiaire d'un conduit 33 aboutissant à une valve de fermeture normalement ouverte 34, et par l'intermédiaire d'un conduit 35 lui faisant suite, à une valve 36 de mise à l'atmosphère contrôlée, comprenant un clapet à pointeau 37 normalement fermé sous l'action d'un ressort de compression 38, mais qui est aussi fonctionnellement relié à la commande volontaire de réglage de puissance du moteur dépendant du conducteur.

Cette liaison est ici prévue par l'intermédiaire d'un câble 39 attelé à un levier basculant 40 commandé à partir de la pédale d'accélérateur 41 du véhicule par une transmission flexible usuelle schématisée 42. Ce câble 39 présente une liaison à course morte avec le clapet 37, ici assurée à l'aide d'un ressort 43 logé dans une partie creuse arrière du clapet et qu'une pièce d'extrémité 44 du câble doit comprimer avant début d'ouverture du clapet.

La course morte 45 de commande du clapet 37 est telle qu'elle correspond à peu près à la course de commande de pleine ouverture du papillon 13, cette dernière s'effectuant à partir de la pédale 41 et du levier basculant 40, par l'intermédiaire d'un ressort 46 reliant ce dernier à un levier 47 calé sur l'axe du papillon 13. Ce ressort 46 s'accommode ainsi qu'une commande d'enfoncement de la pédale 41 poursuivie au-delà de la pleine ouverture du papillon 13 et correspondant à une ouverture progressive du clapet 37 de la valve 36 de mise à l'atmosphère, par compression de son ressort de rappel 38.

Le fonctionnement de ce dispositif de suralimentation est le suivant :

Aux bas régimes, à charge partielle du moteur, le collecteur d'admission 12 est en dépression par rapport à la pression atmosphérique. Le clapet 22 de la valve de pilotage 21 étant ouvert et le trou évent 30 relativement petit (par exemple 1 à 2 mm) par rapport à la section de passage découverte par le clapet 22, la chambre 16 de la valve 15 se trouve mise en dépression. La chambre 17 est à une pression plus élevée que la pression atmosphérique, car le turbocompresseur est en faible fonctionnement. La valve 36 est fermée et il n'y a pas de fuite de pression par les conduits 33, 35. La force résultant de la pression dans la chambre 17 et de la dépression de la chambre 16 est plus grande que la force du ressort 18 de la valve 15. Le clapet de dérivation 5 des gaz d'échappement est alors grandement ouvert et la contre-pression aiffaiblie d'autant.

Aux régimes et charges plus élevés du moteur pour lesquels le papillon 13 est déjà à pleine ouverture, la valve 36 de mise à l'atmosphère s'ouvre graduellement en fonction de l'enfoncement supplémentaire de la pédale d'accélérateur 41. Le turbocompresseur 1 fonctionne davantage en raison de la plus grande énergie dans les gaz d'échappement. La pression dans le collecteur d'admission 12 dépasse la pression atmosphérique. Le clapet 22 de la valve de pilotage 21 ferme la communication entre le collecteur d'admission 12 et la chambre 16 de la valve 15, et par la voie du trou évent 30 la chambre 16 se trouve mise à la pression atmosphérique. Quant à la chambre 17 de la valve 15, la pression tend à y diminuer, car la valve 36 de mise à l'atmosphère ouvre un passage de section fonction de l'enfoncement supplémentaire de la pédale 41, tandis que le débit d'air entrant dans cette chambre 17 est limité par l'étrangleur 32. Lorsque la valve 36 est complètement ouverte, le passage de mise à l'atmosphère est plus grand que celui de l'étrangleur 32. La pression dans la chambre 17 est alors à la pression atmosphérique ou presque à la pression atmosphérique, en raison de la perte de charge dans les conduits de liaison.

Comme la pression dans la chambre 16 se trouve aussi à la pression atmosphérique, le ressort 18 ramène le clapet de dérivation 5 en position de fermeture complète. En choisissant convenablement les sections de passage de la valve 36 et du trou évent 30, la force du ressort 18 et la surface de la membrane de la valve de commande 15, on peut ainsi obtenir une fermeture progressive du clapet de dérivation 5 des gaz d'échappement en fonction de la course d'enfoncement de l'accélérateur. La fermeture progressive du clapet de dérivation 5 accroît le fonctionnement du turbocompresseur, et l'on obtient donc une augmention de la puissance délivrée après ouverture totale du papillon 13 par un tel pilotage du clapet de dérivation 5 des gaz d'échappement. De plus, dans la phase préalable d'amenée du papillon 13 par un tel pilotage du clapet de dérivation 5 des gaz d'échappement. De plus, dans la phase préalable d'amenée du papillon 13 à sa pleine ouverture, on bénéficie d'un gain de pression effective de suralimentation par rapport à ce qu'elle serait avec un papillon ouvert dans les solutions usuelles.

Lorsque le conducteur appuie à fond sur la pédale d'accélérateur pour doubler un autre véhicule (kick-down), les chambres 16 et 17 de la valve de commande 15 se trouvent mises à la pression atmosphérique comme on l'a décrit ci-dessus. Le clapet de dérivation 5 est alors complètement fermé, et le conducteur dispose ainsi de la puissance maximale. C'est pour éviter une suralimentation exagérée qui serait nuisible au moteur, qu'est prévue la valve de fermeture 34 du conduit 33, comprenant un clapet obturateur 48 soumis aux actions opposées d'un ressort taré 49 et de la pression d'air de sortie du compresseur 9, par un conduit 50 dérivé du conduit 31. Ainsi, la fermeture de la valve 34 coupe la mise à l'atmosphère de la chambre 17 et la membrane de la valve 15, poussée par la pression d'air de sortie du compresseur, provoque alors l'ouverture du clapet de dérivation 5 des gaz d'échappement.

Une suralimentation plus élevée, sans souci de consommation réduite, par exemple pour la conduite dite sportive du véhicule, peut aisément être ajoutée à ce dispositif en plaçant une valve de mise à l'atmosphère commandable à volonté par le conducteur, sur le conduit 35 reliant la valve de fermeture 34 à la valve de mise à l'atmosphère 36.

Une telle valve de mise à l'atmosphère volontaire est schématisée en 51 comme pouvant être à commande mécanique (flèche 52) mais elle peut aussi être à commande électromagnétique notamment. Lorsque cette valve 51 est ouverte, elle met en permanence la chambre 17 à la pression atmosphérique et le ressort 18 est tel qu'il ramène alors le clapet de dérivation 5 des gaz d'échappement en position de fermeture, c'est-à-dire qu'est obtenue une suralimentation relativement plus importante que précédemment mais au détriment d'une consommation plus élevée de combustible.

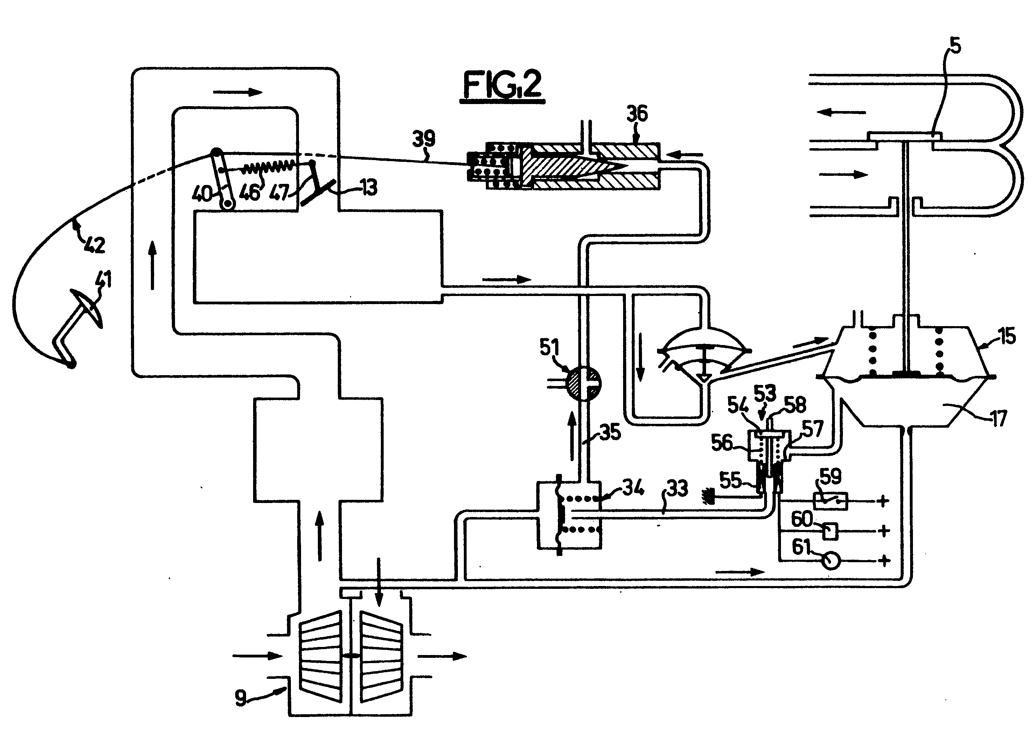

Le dispositif de suralimentation représenté à la figure 2 est entièrement identique à celui de la figure 1, à l'exception de l'adjonction de la valve 53 ici interposée entre la chambre 17 de la valve de commande 15 du clapet 5 de dérivation des gaz d'échappement, et la valve de fermeture 34 du conduit 33 sensible à toute surpression de sortie du compresseur 9.

La valve 53 est normalement ouverte, c'est-à-dire qu'elle laisse normalement ouvert le conduit 33, et que le fonctionnement de base de l'ensemble de ce dispositif de suralimentation reste identique à celui déjà exposé en détail dans le cas de la figure 1.

Cette valve 53 comporte un clapet 54 à commande électromagnétique, dont la tige forme noyau d'un solénoïde 55, et qui est normalement sollicité par un ressort 56 en position d'ouverture par rapport à son siège 57.

Dans sa position de repos, le clapet 54 obture en outre ici un passage 58 de mise à l'atmosphère.

Le solénoïde 55, ici sa borne d'alimentation positive, est relié à au moins un détecteur de fonctionnement anormal du moteur, celui représenté sous forme symbolique en 59 comme un contact à fermeture étant, par exemple, un contact électrique thermosensible se fermant à partir d'une certaine température de l'eau du circuit de refroidissement du moteur. En parallèle à un tel détecteur peuvent aussi être branchés d'autres détecteurs gouvernant l'alimentation du solénoïde, dans leur état de détection d'anomalie, tel qu'un détecteur électronique de cliquetis 60 pouvant être constitué de manière connue par un capteur de vibrations de type accélérométrique ou piézoélectrique implanté sur la culasse du moteur, ou un détecteur 61 d'émissions nocives des gaz d'échappement pouvant être constitué par une sonde à oxygène du type dit lamba ou une sonde électrochimique constituant capteur de monoxyde de carbone ou d'oxygène, placée dans le circuit d'échappement.

Ainsi, aux régimes et charge élevés du moteur pour lesquels est établie comme exposé précédemment la mise à l'atmosphère contrôlée de la chambre 17 de la valve 15 par la voie de la valve 36, tendant à la fermeture du clapet 5 de dérivation des gaz d'échappement, s'il survient une détection de fonctionnement anormal du moteur, le clapet 54 de la valve asservie 53 est attiré sur son siège 57 et coupe ledit circuit de mise à l'atmosphère contrôlée. De ce fait, la pression régnant dans la chambre 17 de la valve 15 alimentée par le compresseur 9 s'élève et provoque ou accroît l'ouverture du clapet 5 de dérivation des gaz d'échappement, ce qui a pour effet de diminuer la suralimentation du moteur et d'entraîner la disparition des anomalies détectées qui lui sont liées.

C'est afin d'éviter en ce cas une réduction trop franche de la puissance du moteur, qu'est de préférence prévu le passage 58 de mise à l'atmosphère de la chambre 17 découvert par le clapet 54, dont l'effet est de modérer l'élévation de la pression dans la chambre 17, et donc le degré d'ouverture correspondant du clapet 5 de dérivation des gaz d'échappement.

Un tel dispositif s'applique non seulement à une suralimentation excessive due à certaines utilisations du moteur, mais aussi au cas où il y a un déréglage ou une défaillance d'un composant du moteur (par exemple déréglage d'allumage, déréglage d'injection de carburant, encrassement de bougie, etc.) Dans ce dernier cas, le moteur est protégé en attendant la remise en état.

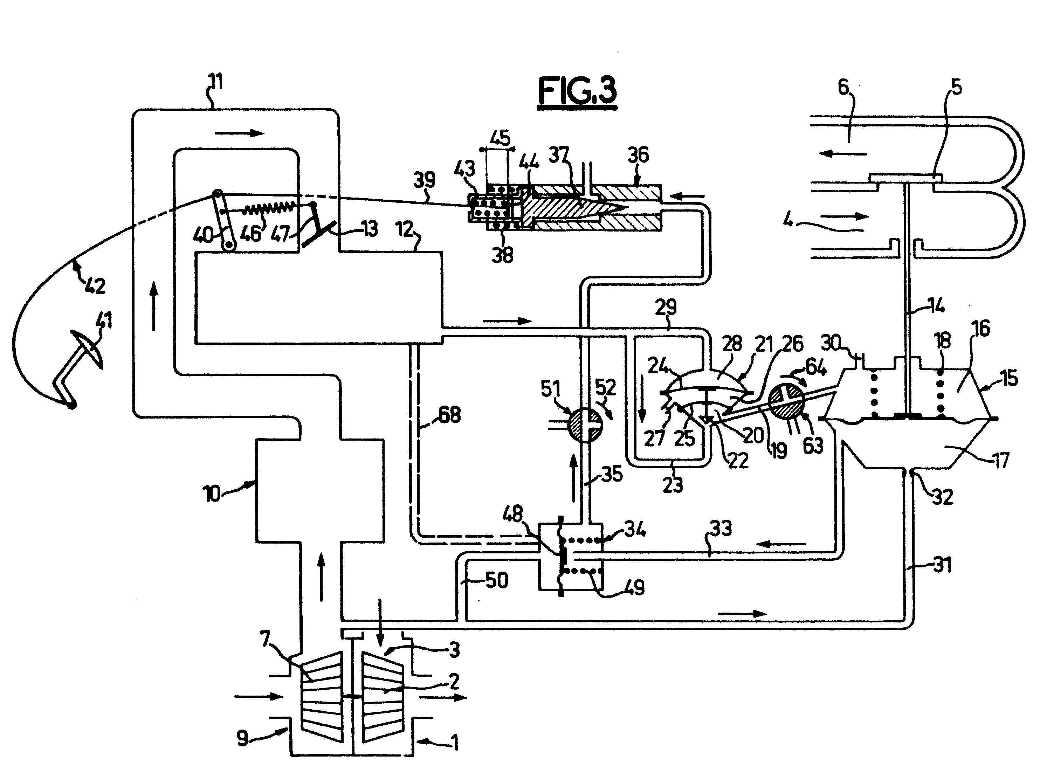

Selon la première variante illustrée sur la figure 3, une valve 63 de mise à l'atmosphère commandée identique à la valve 51 est interposée dans la liaison 19 entre la valve de pilotage 21 et la chambre 16 de la valve de commande 15. La valve 63 identique à la valve 51 peut être à commande mécanique (flèche 64) ou à commande électromagnétique.

Lorsque les deux valves 51 et 63 ne sont pas mises à l'atmosphère comme illustré sur la figure 3, l'ensemble du système fonctionne de façon à assurer une consommation réduite comme il a été expliqué précédemment. Lorsque les deux valves 51 et 63 sont au contraire dans la position inverse après rotation selon les flèches 52 et 64 de façon à mettre à l'atmosphère les conduits 35 et 19, la chambre 17, se trouve pratiquement à la pression atmosphérique ainsi que la chambre 16 de la valve de commande 15 même dans le cas où le collecteur d'admission 12 se trouve en dépression. En effet, le conduit 19 ne se trouve plus relié à la valve de pilotage 21.

Il en résulte que le ressort 18 ramène le clapet de dérivation 5 des gaz d'échappement en position fermée. On obtient donc une suralimentation relativement plus importante au détriment d'une consommation plus élevée de combustible.

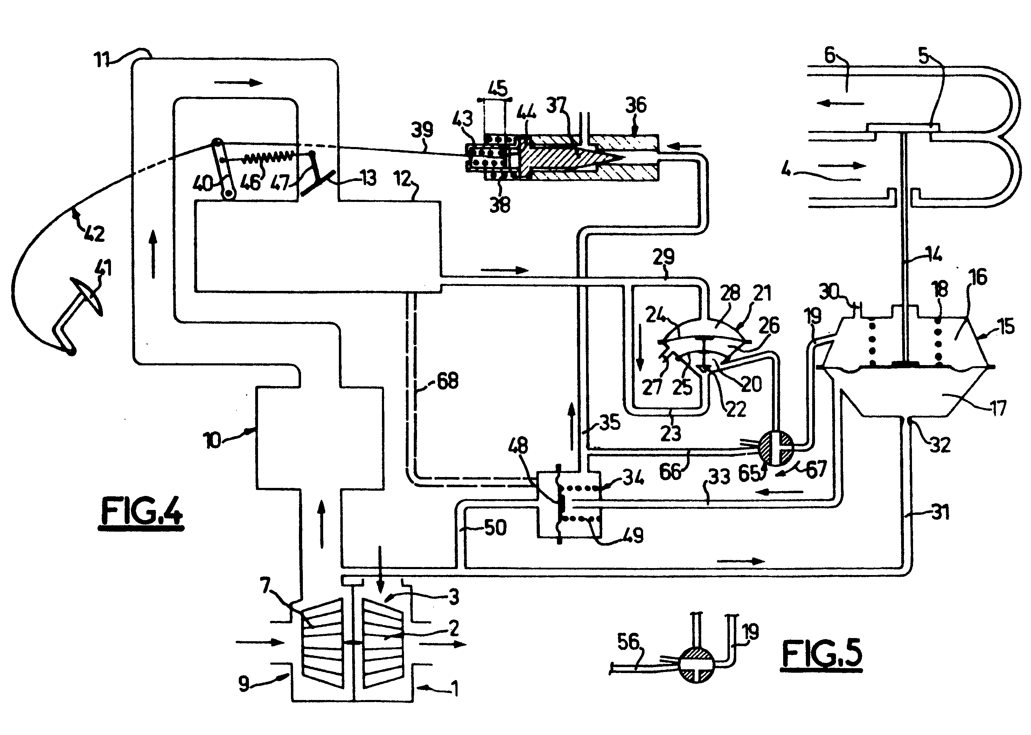

Dans la variante simplifiée représentée sur la figure 4, la valve 51 est supprimée et l'on utilise une seule valve à quatre voies 65 à la place des deux valves 51 et 63 de la figure 3. La valve 65 peut également être à commande manuelle ou électromagnétique. La valve à quatre voies 65 est interposée d'une part dans la liaison 19 entre la valve de pilotage 21 et la chambre 16 de la valve de commande 15 et d'autre part dans la liaison 66 reliant directement l'organe de mise à l'atmosphère 36 à l'autre chambre 17 de la valve de commande 15.

Dans la position illustrée sur la figure 4, la valve de commande 65 autorise le passage entre la valve de pilotage 21 et la chambre 16 de la valve de commande 15 par le conduit 19. La chambre 17 est en communication par les conduits 33 et 35 par l'intermédiaire de la valve de protection 34 avec l'organe de mise à l'atmosphère 36. Dans cette position, l'ensemble du système fonctionne donc avec une consommation réduite comme expliqué précédemment.

Lorsque l'on tourne la valve à quatre voies 65 dans le sens de la flèche 67, jusque dans la position illustrée sur la figure 5, les chambres 16 et 17 de la valve de commande sont toutes deux mises à la pression atmosphérique et la liaison entre la valve de pilotage 21 et la valve de commande 15 est interrompue. Le ressort 18 ramène donc le clapet de dérivation 5 en position de fermeture et l'on obtient une suralimentation plus importante permettant la conduite sportive quelle que soit la charge, c'est-à-dire même aux faibles charges du moteur.

Dans les deux variantes illustrées sur les figures 3 et 4, la valve de protection 34 assure toujours la fonction de protection du moteur en cas de suralimentation exagérée. Selon une variante, illustrée en trait mixte sur les figures 3 et 4, la valve de protection 34 peut être commandée directement par la pression régnant dans le collecteur d'admission 12 par l'intermédiaire du conduit 68, le conduit 50 étant alors supprimé.

Bien entendu d'autres variantes peuvent encore être imaginées tout en restant dans le cadre de l'invention.

**Revendications**

1. Dispositif de suralimentation de moteur à combustion interne par turbocompresseur, comprenant une turbine entraînée par les gaz d'échappement, un compresseur d'air entraîné par la turbine et raccordé à la tubulure d'admission du moteur, et un clapet (5) de dérivation des gaz d'échappement soumis à une valve de commande (15) sensible à une pression dérivée du compresseur, ladite valve de commande (15) étant d'autre part placée sous la dépendance d'une valve de pilotage (21) sensible à la dépression à l'admission du moteur, qui gouverne la valve de commande (15) à l'ouverture du clapet de dérivation (5) aux bas régimes à charge partielle du moteur et à la fermeture aux régimes plus élevés du moteur caractérisé par le fait que la valve de commande (15) est sensible à la pression de sortie du compresseur, et que la partie de la valve de commande (15) sensible à la pression de sortie du compresseur est reliée à un organe de mise à l'atmosphère (36) actionné progressivement à partir d'une position de plein actionnement du papillon d'admission (13) du moteur atteinte en cours de course de commande de puissance maximale, de sorte que dans la partie de cette course faisant suite à la pleine ouverture du papillon d'admission du moteur, la puissance délivrée est fonction du pilotage à la fermeture du clapet de dérivation (5) dépendant du degré d'actionnement dudit organe de mise à l'atmosphère (36).

2. Dispositif de suralimentation selon la revendication 1, caractérisé en ce que la valve de pilotage (21) est à fonctionnement différentiel entre dépression et atmosphère.

3. Dispositif de suralimentation selon la revendication 1 ou 2, caractérisé en ce qu'il est interposé dans la liaison entre la partie (17) de la valve de commande (15) sensible à la pression de sortie du compresseur et ledit organe de mise à l'atmosphère (36), une valve (34) de fermeture de cette liaison répondant à une pression de sortie maximale prédéterminée du compresseur, afin que ladite valve de commande (15) réponde à cette fermeture par l'ouverture du clapet de dérivation (5), destinée à limiter la pression de suralimentation.

4. Dispositif de suralimentation selon la revendication 3, caractérisé en ce qu'il est interposé dans la liaison entre ladite valve de fermeture (34) et ledit organe de mise à l'atmosphère (36), un autre organe de mise à l'atmosphère (51) commandé en tout ou rien à volonté pour obtenir une suralimentation plus élevée.

5. Dispositif de suralimentation selon l'une des revendications précédentes, caractérisé en ce qu'il comporte, en circuit entre ladite valve de commande (15) et ledit organe (36) de mise à l'atmosphère contrôlée, une valve (53) normalement ouverte et asservie à au moins un détecteur (59-61) de fonctionnement anormal du moteur, de façon à répondre à ce dernier par fermeture du circuit (33-36) de mise à l'atmosphère contrôlée, et à actionner ainsi la valve (15) de commande à l'ouverture du clapet (5) de dérivation des gaz d'échappement réduisant la suralimentation.

6. Dispositif de suralimentation selon la revendication 5, caractérisé en ce que ladite valve asservie normalement ouverte (53) est adaptée pour établir, dans sa position de fermeture du circuit (33-36) précité, l'ouverture d'un passage (58) de mise à l'atmosphère prédéterminé de la partie (17) de la valve de commande (15) sensible à la pression de sortie du compresseur.

7. Dispositif de suralimentation selon l'une des revendications 5 ou 6, caractérisé en ce que ladite valve asservie normalement ouverte (53) est interposée entre ladite valve de fermeture (34) et la valve de commande (15).

8. Dispositif de suralimentation selon l'une des revendications 5 à 7, caractérisé en ce que ladite valve asservie (53) est à commande électromagnétique et que le détecteur (59-61) de fonctionnement anormal du moteur est à réponse électrique.

9. Dispositif de suralimentation selon la revendication 8, caractérisé en ce que le détecteur est un contact électrique (59) thermosensible de surchauffe du moteur.

10. Dispositif de suralimentation selon la revendication 8, caractérisé en ce que le détecteur est un détecteur électronique de cliquetis (60).

11. Dispositif de suralimentation selon la revendication 8, caractérisé en ce que le détecteur est un détecteur d'émissions nocives des gaz d'échappement (61).

12. Dispositif de suralimentation selon la revendication 4, caractérisé par le fait qu'un organe supplémentaire de mise à l'atmosphère (63) commandé en tout ou rien à volonté, est interposé dans la liaison entre la valve de commande (15) et la valve de pilotage (21) afin d'obtenir une suralimentation plus élevée quelle que soit la charge du moteur à combustion interne.

13. Dispositif de suralimentation selon l'une des revendications 1, 2 ou 3, caractérisé par le fait qu'une valve à quatre voies (65) de mise à l'atmosphère commandée en tout ou rien à volonté est interposée d'une part dans la liaison (19) entre une chambre (16) de la valve de commande (15) et la valve de pilotage (21) et d'autre part dans la liaison entre l'autre chambre (17) de la valve de commande (15) et l'organe de mise à l'atmosphère (36) afin d'obtenir une suralimentation plus élevée quelle que soit la charge du moteur à combustion interne.

14. Dispositif de suralimentation selon la revendication 1, caractérisé par le fait qu'une valve de protection (34) est interposée dans la liaison entre la chambre (17) de la valve de commande (15) sensible à la pression de sortie du compresseur et ledit organe (36) de mise à l'atmosphère et répond dans le sens de la fermeture à une pression maximale déterminée régnant dans le collecteur d'admission (12).

**Claims**

1. A turbocharging system for internal combustion engines comprising a turbine driven by the exhaust gases, an air compressor driven by the turbine and connected to the engine intake manifold and an exhaust gas by-pass valve (5) controlled by a valve (15) sensing a pressure derived from the compressor, with the said control valve (15) also being placed under the influence of a pilot valve (21) sensitive to the depression at the engine intake, which governs the control valve (15) to open the by-pass valve (5) at low speeds under partial engine load and to close it at higher engine speeds, characterized in that the control valve (15) is sensitive to the compressor outlet pressure and in that the part of the control valve (15) sensitive to the compressor outlet pressure is connected to an atmosphere venting component (36) operated progressively from a full engine intake throttle (13) position produced during the maximum power control travel so that in the portion of this travel which follows complete opening of the engine intake throttle the power delivered is a function of the pilot closure action on the by-pass valve (5) which depends on the extent to which the said atmosphere venting component (36) is operated.

2. The turbocharging system according to claim 1, characterized in that the pilot valve (21) operates differentially between the depression and atmosphere.

3. The turbocharging system according to claims 1 or 2, characterized in that a valve (34) is inserted in the connection between the part (17) of the control valve (15) that is sensitive to the compressor outlet pressure and the said atmosphere venting component (36), with this valve (34), closing this connection, responding to a preset maximum output pressure of the compressor so that the said control valve (15) responds to this closure by opening the by-pass valve (5) intended to limit the turbocharging pressure.

4. The turbocharging system according to claim 3, characterized in that another atmosphere venting component (51) is inserted on the connection between the said closure valve (34) and the said atmosphere venting component (36), with this venting component (51) being operated to be open or closed as required to produce greater turbocharging.

5. The turbocharging system according to any of the preceding claims, characterized in that it also comprises in the circuit between the said control valve (15) and the said controlled atmosphere venting component (36), a valve (53) that is normally open and is controlled by at least one engine malfunction sensor (59-61) so as to respond to the latter by closing the controlled atmosphere venting circuit (33-36) and thus operate the valve (15) controlling the opening of the exhaust gas by-pass valve (5) reducing the turbocharging.

6. The turbocharging system according to claim 5, characterized in that the said normally open controlled valve (53) is designed so that, in its position closing the above-mentioned circuit (33-36), it opens a preset atmosphere venting passage (58) venting to the atmosphere the portion (17) of the control valve (15) that is sensitive to the compressor outlet pressure.

7. The turbocharging system according to either of claims 5 or 6, characterized in that the said normally open controlled valve (53) is inserted between the said closure valve (34) and the control valve (15).

8. The turbocharging system according to either of claims 5 to 7, characterized in that the said controlled valve (53) is electromagnetically controlled and in that the engine malfunction sensor has an electrical response.

9. The turbocharging system according to claim 8, characterized in that the sensor is a heat sensitive electrical contact sensing overheating of the engine.

10. The turbocharging system according to claim 8, characterized in that the sensor is an electronic pinking detector (60).

11. The turbocharging system according to claim 8, characterized in that the sensor is an exhaust gas harmful emissions detector (61).

12. The turbocharging system according to claim 4, characterized in that an additional atmosphere venting component (63) controlled to be open or closed as wished is inserted in the connection between the control valve (15) and the pilot valve (21) in order to provide greater turbocharging whatever the load on the internal combustion engine.

13. The turbocharging system according to claims 1, 2 or 3, characterized in that a four-way atmosphere venting valve (65) operated to be open or closed as required is inserted both in the connection (19) between a chamber (16) of the control valve (15) and the pilot valve (21) and also in the connection between the other chamber (17) of the control valve (15) and the atmosphere venting component (36) in order to achieve greater turbocharging whatever the load on the internal combustion engine.

14. The turbocharging system according to claim 1, characterized in that a protection valve (34) is inserted into the connection between the control valve (15) chamber (17) sensitive to the compressor outlet pressure and the said atmosphere venting component (36) and responds so as to close at a preset maximum pressure in the intake manifold (12).

**Ansprüche**

1. Aufladungsvorrichtung für Verbrennungsmotoren durch Turbokompressor, enthaltend eine von den Auspuffgasen angetriebene Turbine, einen von der Turbine angetriebenen und an den Zuluftstutzen des Motors gelegten Luftverdichter, sowie ein Klappenventil (5) für die Auspuffgase, das von einem auf einem von Verdichter abgeleiteten Druck reagierenden Steuerventil (15) gesteuert wird, wobei das genannte Steuerventil (15) andererseits von einem auf Unterdruck im Eingang des Motors reagierenden Regelventil (21) abhängig ist, das das Steuerventil (15) so regelt, daß es das Klappenventil (5) bei geringen Drehzahlen mit teilweiser Aufladung des Motors öffnet und bei höheren Drehzahlen des Motors schließt, dadurch gekennzeichnet, daß das Steuerventil (15) auf den Ausgangsdruck des Verdichters anspricht und der auf den Ausgangsdruck des Verdichters reagierende Teil des Steuerventils (15) mit einem Entlüftungsorgan (36) verbunden ist, das ab einer Stellung, in der die Drosselklappe (13) des Motors voll bestätigt ist, im Verlauf des Gangs der Stuerung der maximalen Leistung fortschreitend betätigt wird, so daß im Verlauf dieses Gangs nach der vollen Öffnung der Drosselklappe des Motors die abgegebene Leistung eine Funktion der Regelung des Klappenventils (5) in Richtung auf das Schließen in Abhängigkeit vom Grad der Betätigung des genannten Entlüftungsorgans (36) ist.

2. Aufladungsvorrichtung gemäß Anspruch 1, dadurch gekennzeichnet, daß das Regelventil (21) als Differentialventil auf den Unterschied zwischen Unterdruck und Atmosphärendruck anspricht.

3. Aufladungsvorrichtung gemäß Anspruch 1 oder 2, dadurch gekennzeichnet, daß sie in der Verbindung zwischen dem Teil (17) des Steuerventils (15), der auf den Ausgangsdruck des Verdichters anspricht, und dem genannten Entlüftungsorgan (36) liegt, wobei ein Schließventil (34) dieser Verbindung auf einen vorgegebenen maximalen Ausgangsdruck des Verdichters anspricht, damit das genannte Steuerventil (15) auf dieses Schließen mit dem Öffnen des Klappenventils (5) anspricht, das zur Begrenzung des Ladedrucks bestimmt ist.

4. Aufladungsvorrichtung gemäß Anspruch 3, dadurch gekennzeichnet, daß in die Verbindung zwischen dem genannten Schließventil (34) und dem genannten Entlüftungsorgan (36) ein weiteres Entlüftungsorgan (51) gelegt ist, das nach Wunsch ganz offen oder ganz geschlossen wird, um eine höhere Aufladung zu erreichen.

5. Aufladungsvorrichtung gemäß einem der vorstehenden Ansprüche, dadurch gekennzeichnet, daß sie im Kreis zwischen dem genannten Steuerventil (15) und dem genannten Entlüftungsorgan (36) ein im Normalzustand offenes Ventil (53) enthält, das von wenigstens einem Fühler (59-61) für ein anomales Betriebsverhalten des Motors geregelt wird, so daß es auf diesen letzteren mit Schließen des gesteuerten Entlüftungskreises (33-36) und damit mit der Regelung des Steuerventils (15) in Richtung auf das Öffnen des Klappenventils (5) für die Auspuffgase reagiert und damit die Aufladung reduziert.

6. Aufladungsvorrichtung gemäß Anspruch 5, dadurch gekennzeichnet, daß dieses normalerweise offene geregelte Ventil (53) so eingestellt ist, daß es in seiner geschlossenen Stellung für den vorgenannten Kreis (33-36) einen vorgegebenen Durchgang (58) zur Entlüftung des Teils (17) des auf den Ausgangsdruck des Verdichters ansprechenden Steuerventils (15) öffnet.

7. Aufladungsvorrichtung gemäß einem der Ansprüche 5 oder 6, dadurch gekennzeichnet, daß dieses normalerweise offene geregelte Ventil (53) zwischen das genannte Schließventil (34) und das Steuerventil (15) gelegt wird.

8. Aufladungsvorrichtung gemäßt einem der Ansprüche 5 bis 7, dadurch gekennzeichnet, daß das genannte geregelte Ventil (53) elektromagnetisch gesteuert wird und der Fühler für das anomale Arbeiten des Motors mit einem elektrischen Signal anspricht.

9. Aufladungsvorrichtung gemäß Anspruch 8, dadurch gekennzeichnet, daß der Fühler ein elektrischer Kontakt (59) ist, der auf die Überhitzung des Motors anspricht.

10. Aufladungsvorrichtung gemäß Anspruch 8, dadurch gekennzeichnet, daß der Fühler eine elektronische Vorrichtung (60) ist, die auf Klopfgeräusche anspricht.

11. Aufladungsvorrichtung gemäß Anspruch 8, dadurch gekennzeichnet, daß der Fühler (61) auf Schadstoffemissionen in den Auspuffgasen des Motors anspricht.

12. Aufladungsvorrichtung gemäß Anspruch 4, dadurch gekennzeichnet, daß ein zusätzliches Entlüftungsorgan (63), das nach Wunsch ganz offen oder ganz geschlossen eingestellt wird, in die Verbindung zwischen dem Steuerventil (15) und dem Regelventil (21) gelegt ist, um unabhängig von der Belastung des Verbrennungsmotors eine höhere Aufladung zu erzielen.

13. Aufladungsvorrichtung gemäß einem der Ansprüche 1, 2 oder 3, dadurch gekennzeichnet, daß ein Vierwegventil (65) zur Entlüftung, das nach Wunsch ganz offen oder ganz geschlossen eingestellt wird, einerseits in die Verbindung (19) zwischen einer Kammer (16) des Steuerventils (15) und dem Regelventil (21) und andererseits in die Verbindung zwischen der anderen Kammer (17) des Steuerventils (15) und dem Entlüftungsorgan (36) gelegt wird, um unabhängig von der Belastung des Verbrennungsmotors eine höhere Aufladung zu erzielen.

14. Aufladungsvorrichtung gemäß Anspruch 1, dadurch gekennzeichnet, daß ein Schutzventil (34) in die Verbindung zwischen der Kammer (17) des auf den Ausgangsdruck des Verdichters ansprechenden Steuerventils (15) und dem Entlüftungsorgan (36) gelegt ist und bei einem vorgegebenen im Ansaugsammler (12) herrschenden Maximaldruck im Sinne des Schließens anspricht.

FIG.1

**FIG 2**

**FIG.3**

FIG.4

FIG.5

4